**Europäisches Patentamt**

**European Patent Office**

**Office européen des brevets**

(11) Numéro de publication: **0 151 086**
**A2**

## (12) DEMANDE DE BREVET EUROPEEN

(21) Numéro de dépôt: **85450002.2**

(51) Int. Cl.⁴: **A 61 C 9/00**

(22) Date de dépôt: **28.01.85**

(30) Priorité: **30.01.84 FR 8401521**

(71) Demandeur: **Maltese, Serge, 10 Rue Charlas,
F-31200 Toulouse (FR)**
Demandeur: **Castan, Mir, 39 Allées des Rosiers
Montrabe, F-31130 Balma (FR)**
Demandeur: **Jolly, Paul, 1 rue des Pyrénées,
F-31400 Toulouse (FR)**

(43) Date de publication de la demande: **07.08.85
Bulletin 85/32**

(72) Inventeur: **Maltese, Serge, 10 Rue Charlas,
F-31200 Toulouse (FR)**
Inventeur: **Castan, Mir, 39 Allées des Rosiers Montrabe,
F-31130 Balma (FR)**
Inventeur: **Jolly, Paul, 1 rue des Pyrénées,
F-31400 Toulouse (FR)**

(84) Etats contractants désignés: **AT BE CH DE FR GB IT LI
LU NL SE**

(74) Mandataire: **Ravina, Bernard, Cabinet Bernard
RAVINA 24, boulevard Riquet, F-31000 Toulouse (FR)**

(54) **Dispositif de préparation et de positionnement de "Dies" ou modeles positifs unitaires pour tout ou partie de l'une ou des deux arcades dentaires et de mise en occluseur ou articulateur.**

(57) La présente invention a pour objet un dispositif de préparation et de positionnement de «dies» ou modèles positifs unitaires pour tout ou partie de l'une ou de deux arcades dentaires et de mise en occluseur ou articulateur.

Le dispositif selon la présente invention comporte au moins un bloc support-die (5) qui se fixe à l'une des branches (1), (2), d'un occluseur ou articulateur et un bloc positionneur (15) qui reçoit le moulage (6) de la préparation et se fixe sur le support-die et se caractérise essentiellement en ce que le bloc positionneur présente une lumière continue (12) en arc de cercle, ladite lumière traversant le support-die et que le bloc positionneur (15) en forme d'arc de cercle comprend un plateau (16) recevant le moulage et une partie inférieure (17) continue de forme correspondant à celle de la lumière qui traverse celle-ci.

EP 0 151 086 A2

1

DISPOSITIF DE PREPARATION ET DE POSITIONNEMENT DE "DIES" OU MODELES POSITIFS UNITAIRES POUR TOUT OU PARTIE DE L'UNE OU DE DEUX ARCADES DENTAIRES ET DE MISE EN OCCLUSEUR OU ARTICULATEUR.

La présente invention concerne le domaine des réalisations prothétiques de l'art dentaire, que ces réalisations prothétiques soient conjointes ou adjointes.

Actuellement la prothèse dentaire adjointe ou conjointe est réalisée à partir d'empreintes prises sur le patient par le dentiste puis coulées par le praticien lui-même ou par le mécanicien dentiste avec un matériau tel que du platre ou autre pour obtenir des moulages reproduisant les dents et gencives du patient.
Ces moulages sont ensuite positionnés l'un par rapport à l'autre suivant une localisation bien déterminée qui a été préalablement enregistrée en bouche par une prise d'occlusion.

Suite à cette prise d'occlusion, le technicien qui dispose de modèles positionnés l'un par rapport à l'autre procède à la mise en occluseur ou en articulateur.

Il est à noter pour la bonne compréhension qu'il existe une différence entre un occluseur et un articulateur et entre prothèse conjointe et prothèse adjointe.
L'occluseur est un appareil comportant deux branches sur lesquelles sont fixés les moulages, les branches sont reliées par un axe charnière ce qui permet uniquement des mouvements d'ouverture et de fermeture de la mandibule.

L'articulateur est un appareil plus complexe comportant lui aussi

deux branches sur lesquelles sont fixés les moulages, ces deux branches étant reliées entre elles par un système qui permet tous les mouvements possibles de la mandibule.

Dans le cas de l'occluseur comme dans celui de l'articulateur est opérée une mise en opposition des deux arcades dentaires constituant la mandibule en sorte de reproduire leur positionnement relatif tel qu'il existe en bouche.

La prothèse adjointe est une prothèse qui tient aux dents par crochets ou autres procédés ou tout simplement par appui sur la muqueuse, elle est amovible et ne nécessite en phase de laboratoire aucun sciage du moulage mais seulement une mise en occluseur ou articulation.

Ce que l'on appelle prothèse conjointe est une prothèse fixée sur les dents (couronnes coulées, chappes de Richmond, CIV, INLAY, ONLAYS, faux moignons, etc....) et qui une fois scellée aux dents ne s'enlève plus.

La réalisation de ce type de prothèse nécessite en premier lieu une préparation des dents destinées à la recevoir.
Cette préparation consiste en une réduction du volume des dents concernées effectuée par le dentiste suivant des critères déterminés.

Cette réduction ayant été réalisée le dentiste procède à une prise d'enpreinte très précise des dents préparées à l'aide d'un matériau d'empreinte fiable.
Les empreintes obtenues sont remplies par coulage avec un matériau le plus dur et le plus précis possible; plâtre, ou autre pour

3

obtenir la reproduction des dents préparées sur lesquelles doivent être réalisées et fixées les prothèses.

Pour confectionner les prothèses, le technicien doit séparer les éléments de l'arcade dentaire pour obtenir un élément unitaire sur lequel il est possible de travailler.

Cette opération s'effectue par sciage de chaque côté de la ou des dents préparées en les respectant et sans porter atteinte aux dents proximales.

Cet élément unitaire constitué de la reproduction de la dent préparée, de sa partie gingivale et de son système de repositionnement et de localisation dans le reste du moulage porte le nom de "die".

Le "die" mot d'origine anglosaxonne passé dans le langage international dentaire est un élément constitué par la reproduction de la préparation, faite en bouche par le dentiste, et de son contour gingival , le tout étant prolongé par un système quelconque de positionnement sur le moulage de travail par rapport aux dents adjacentes.

Pour la réalisation de telles prothèses plusieurs techniques sont utilisées à ce jour.

Une technique consiste à couler l'empreinte prise par le dentiste, à réduire le modèle obtenu à l'aide d'instruments tranchants dans la partie gingivale de telle sorte qu'elle puisse s'insérer dans un moule plastique démontable ayant les proportions de tout ou partie de l'arcade dentaire.

Ce moule cranté dans sa partie interne, sera rempli de plâtre et recevra le moulage taillé comme indiqué plus haut.

Après durcissement de ce plâtre, l'ensemble moule plastique, mou-

4

lage est monté dans un deuxième temps en occluseur ou en articulateur.

Ensuite dans un troisième temps chaque préparation devra être
séparée par sciage après dépose du moule plastique.
Cette technique nécessite pour le travail du technicien une ouverture fréquemment répétée du moule plastique avec un repositionnement
des différents morceaux du moulage sciés qui s'avère long et fastidieux.
De plus l'enlèvement et le repositionnement répétés des fragments
sciés finissent par user ou ébrécher le plâtre ce qui rend le système moins fiable.

Une autre technique consiste à placer sur l'empreinte du dentiste,
en face de chaque préparation, un système comprenant un élément
conique métallique s'insérant dans un fourreau métallique et claveté
dans ce même fourreau.
La partie métallique en dehors du fourreau est prolongée par une
partie cylindrique rétentive.
Le technicien, dans cette technique est obligé de positionner dans
l'empreinte, en face de chaque préparation, le système mentionné
plus haut par collage ou agrafage sur les bords de l'empreinte pour
le maintenir, ensuite de couler le plâtre de reproduction des préparations jusqu'à la limite du fourreau.
Dans un deuxième temps, quand ce plâtre a durci, il faut faire des
rétentions sur les parties qui n'interessent pas les préparations et
isoler les parties interessant les préparations.

Dans un troisième temps il faut couler avec du plâtre la partie du
moulage qui va contenir les fourreaux et dans un quatrième temps se

5

fera la mise en occluseur puis viendra dans un autre temps la séparation des préparations par sciage.

Une autre technique consiste à couler les moulages toujours en
plâtre, à réaliser par meulage une partie très plane à l'opposé
des préparations et des dents.
Dans un deuxième temps on perfore à l'aide d'un appareil adéquat et
par repérage optique, en face de chaque préparation, deux trous
calibrés dans lesquels le technicien scellera deux tiges coniques
métalliques parallèles.
Dans un troisième temps, le prothésiste coule le socle du modèle
dans lequel seront contenues des gaines plastiques où viendront
s'insérer les tiges métalliques coniques.
Dans un autre temps l'ensemble sera mis en occluseur ou articulateur.
Dans cette technique il n'existe pas de clavetage.

Toutes les techniques précédemment citées nécessitent plusieurs
temps de réalisation avec plus ou moins de difficultés ou de matériel nécessaire à leur mise en oeuvre.

Le brevet PCT/US 80/00610 DENTAL ESSENTIALS INC apporte une amélioration aux techniques de l'art antérieur.
Ce brevet décrit un dispositif comportant une base fixée à chaque
branche d'un occluseur.
Sur cette base est positionnée par un système à rainure et nervures
une pièce en forme d'arc dentaire dont la paroi supérieure est dotée
d'une pluralité de formes géométriques, en fait des perçages.

Sur cette paroi supérieure vient s'appliquer en emboitement une pièce intermédiaire dotée de formes géométriques complémentaires de celles de la paroi supérieure de la pièce en forme d'arc dentaire en fait des petits pions.

La pièce intermédiaire reçoit le moulage de la préparation.

Les pions de l'une pénétrant dans les perçages de l'autre lorsqu'une portion du moulage et une portion correspondante de la pièce intermédiaire sont sciées, il est théoriquement possible de les replacer exactement à la même position relativement aux autres éléments de l'arc dentaire.

Ce dispositif offre en apparence une solution séduisante.

En fait il est techniquement impropre à un usage dans la pratique et il ne résoud pas le problème que rencontre le technicien dans la réalisation des prothèses adjointes ou conjointes.

La réalisation de prothèses adjointes ou conjointes pose en fait deux problèmes qui sont intimement liés pour l'obtention du résultat final.

Le premier est celui de la mise en occluseur ou articulateur des modèles réalisés en sorte d'obtenir en modèle la situation et la position des arcs dentaires existant en bouche.

Le second est celui non plus de la position relative des modèles d'arc ou portions d'arc dentaire en eux, mais celui de la réalisation des dies et de leur enlèvement et localisation la plus précise possible par rapport aux autres éléments de l'arc dentaire concerné et de l'autre arc dentaire constituant l'ensemble de la mandibule.

Si la mise en occluseur, c'est-à-dire la position relative des arcs dentaires n'est pas bonne ou n'est pas fiable, cas où les arcs dentaires peuvent en cours de manipulation bouger l'un par rapport à l'autre la réalisation des dies sera necessairement imparfaite et nécessitera de nombreuses retouches.

Si les dies après individualisation ne peuvent pas être localisés de manière précise et immobilisés dans la position, la réalisation de la prothèse ne sera pas bonne ou demandera de nombreuses interventions du praticien.

Le brevet PCT DENTAL prévoit des moyens qui en principe sont aptes à solutionner le deuxième problème posé mais qui sont sans relation avec la solution du premier problème rencontré par le praticien dont on sait qu'il est indissociable du deuxième.

Le but de l'invention est de réaliser un appareil qui permette de remédier aux imperfections de l'art antérieur pour la réalisation de modèles de travail pour prothèses adjointes avec une simplification et un gain de temps important dans la réalisation de dies en prothèse conjointe et dans le montage en occluseur et ou articulateur.

L'invention vise à résoudre par l'utilisation de moyens identiques la mise en occluseur ou articulateur et le positionnement des dies en offrant en outre aux dentistes un appareil qui leur permette de vérifier de manière très précise le travail effectué par le prothè- siste et ce sans que celui-ci se démunisse de son outil de travail l'un et l'autre ayant des appareils rigoureusement identiques.

Un autre avantage de l'invention est de permettre avec un même appareil de confectionner des prothèses concernant des bouches dif-

8

férentes sans être obligé comme auparavant d'utiliser plusieurs occluseurs.

L'invention consiste donc en un dispositif comportant deux pièces essentielles, un support évidé que l'on appellera "support-dies" et qui constitue la partie femelle du système et une partie amovible mâle qui viendra s'encastrer très précisément dans la partie évidée femelle, on appellera cette partie mâle "bloc positionneur". L'appellation "support dies" a été choisie pour simplifier la description.

Cette appellation est équivalente à support de modèle total ou partiel de l'arc dentaire.

L'appareil suivant le mode de réalisation présenté consiste en un occluseur supportant par l'intermédiaire d'un système de blocage et de positionnement les deux "supports-dies" supérieur et inférieur.

Le "support die" est une pièce ayant la forme générale d'une arcade dentaire arrondie ou angulée, s'inscrivant sensiblement dans une 1/2 ellipse.

Il est réalisé de préférence dans un matériau dur et non oxydable, mais il peut être à la rigueur réalisé dans tout autre matériau.

Il comporte une base plane prolongée à l'arrière par deux tenons qui permettent sa solidarisation et son positionnement sur les branches de l'occluseur.

Le support die est doté de manière connue de tous moyens permettant sa fixation sur les branches de l'occluseur.

Ces moyens peuvent être des perçages recevant les branches de l'occluseur.

Cette base plane est percée de trous calibrés ou d'une fenêtre qui

9

permettent par l'adjonction d'une pièce plastique jetable, le montage du "support-die" sur articulateur.

Cette base plane comporte sur son pourtour, excepté au niveau de la
partie munie des tenons, un renflement de section rectangulaire qui
est évidé sur toute sa longueur, perpendiculairement à la base plane
et de part en part.

L'évidement du "bloc positionneur" est effectué suivant une lumière
continue qui le traverse complètement.

De préférence, cette lumière est selon sa section, tronconique en
haut plus parallèlépipèdique et dotée de reliefs et de creux sur ses
parois.

Sur le corps du renflement il peut être fait des perçages transversaux qui peuvent servir au clavetage du "bloc positionneur" et
des dies.

Le "bloc positionneur" est une pièce ayant la forme générale d'une
arcade dentaire arrondie ou angulée et s'emboîtant trés rigoureusement dans les évidements du "support die". Ce "bloc positionneur"
est réalisé dans un matériau plastique dur et facilement sciable
mais il peut être réalisé dans tout autre matériau. Ce "bloc positionneur" est la reproduction trés précise en positif de la lumière
du " support-die". Il est prolongé à sa base par une partie servant
d'une part à son clavetage et d'autre part à son extraction du "support die", et porte en sa partie supérieure un plateau muni de
rétententions permettant le bon ancrage du moulage.

Suivant une des caractéristiques essentielles de l'invention le support die présente une lumière traversant continue ayant la forme
d'un arc de cercle; cette lumière est dotée de reliefs et creux, et le "bloc positionneur" qui reçoit le moulage est une pièce continue ayant une forme correspondant à celle de la lumière dont il reproduit les creux et reliefs en sorte de s'y encastrer.

Suivant une autre caractéristique de l'invention le bloc positionneur dépasse du support die pour faciliter son enlèvement.
Et suivant encore une autre caractéristique de l'invention le bloc positionneur est soit totalement, soit partiellement claveté transversalement au support die évite tout déplacement du modèle d'arc dentaire lorsque le support dies est sur l'occluseur ou du ou des dies réalisés.

Selon l'invention par coopération d'une lumière traversante continue et d'une pièce bloc positionneur continu on réalise à la fois le blocage en fonction du modèle de mandibule et celui du ou des dies.

D'autre avantages et caractéristiques de l'invention apparaîtront à la lecture de la description ci-après de formes de réalisation de l'invention données à titre d'exemple non limitatif et illustrée par les dessins joints dans lesquels :

-la figure 1 est une vue de l'ensemble de l'occluseur en vue latérale avec ses " supports dies " dans lesquels sont insérés les "blocs positionneurs" supportant les moulages en position d'occlusion.

-la figure 2 est une vue éclatée montrant le "support die" avec sa lumière, le "bloc positionneur" avec son plateau muni de rétention et sa partie verticale correspondant à la lumière et le moulage comportant une préparation.

ιι

-La figure 3 représente le "bloc positionneur" solidarisé à un moulage avec en pointillés la découpe que devra réaliser le technicien
pour la séparation de la préparation en vue de l'obtention d'un die.

-La figure 4 montre une vue latérale du "support-die" dans lequel
est inséré le "bloc positionneur" avec la préparation déjà séparée
du modèle,sortie et ses possibilités de clavetage selon une forme de
réalisation.

-La figure 5 est une vue en coupe suivant le repaire A-A de la figure 3.

-La figure 6 est une vue de dessous du "support-die".

-La figure 7 est une vue en coupe du "support-die" suivant B-B de la
figure 6

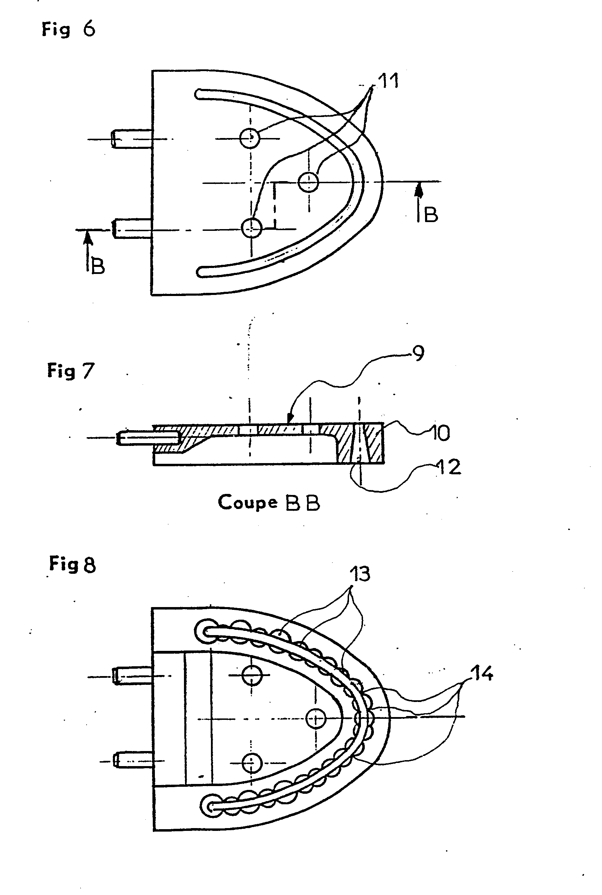

-La figure 8 est une vue de dessus du "support-die".

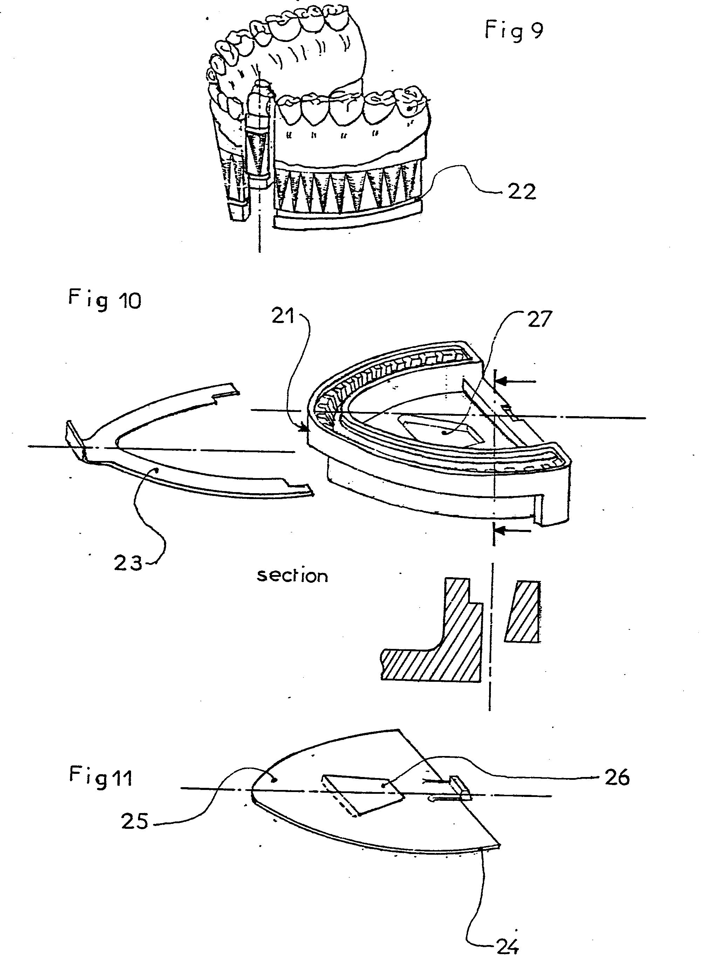

-La figure 9 est une vue en éclaté du support die et bloc positionneur suivant une autre forme de réalisation qui diffère des précédentes notamment au niveau du clavetage.

D E S C R I P T I O N

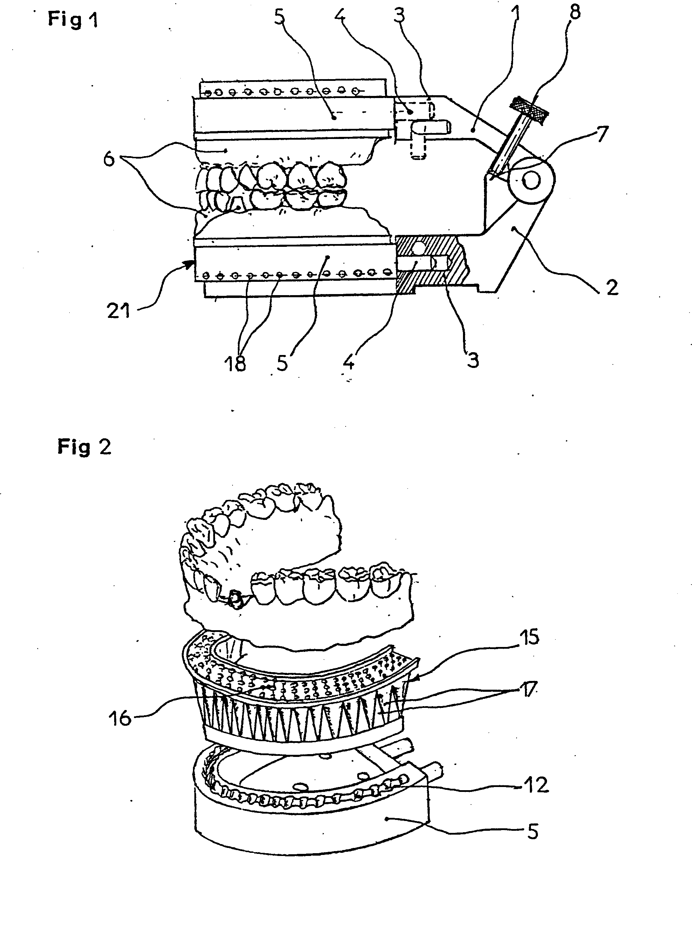

En figure 1 est représenté un occluseur équipé du dispositif selon
l'invention.

L'occluseur de type connu comporte deux branches 1, 2 articulées chacune étant dotée d'un dispositif 3 de blocage et de positionnement constitué par exemple par des percages borgnes qui reçoivent des tenons 4 de la pièce support die 5 sur laquelle s'adapte le moulage 6 de la préparation.

De manière connue l'occluseur comporte un système de blocage en fermeture 7 et une vis 8 permettant la séparation des branches.

Le support dies comme représenté aux figures est une pièce en forme d'arc de cercle reproduisant sensiblement la forme d'un arc dentaire.

Il est doté d'une base plane 9 et d'un renflement périphérique 10 de section rectangulaire.

La base plane 9 est dotée de perçage 11 pour la fixation éventuelle sur un articulateur au moyen de plaquette en plastique jetable de type connu.

Le renflement périphérique en arc de cercle 10 est doté d'une lumière continue 12 transversale et débouchant sous celui-ci.

Cette lumière étant perpendiculaire à la base plane 9.

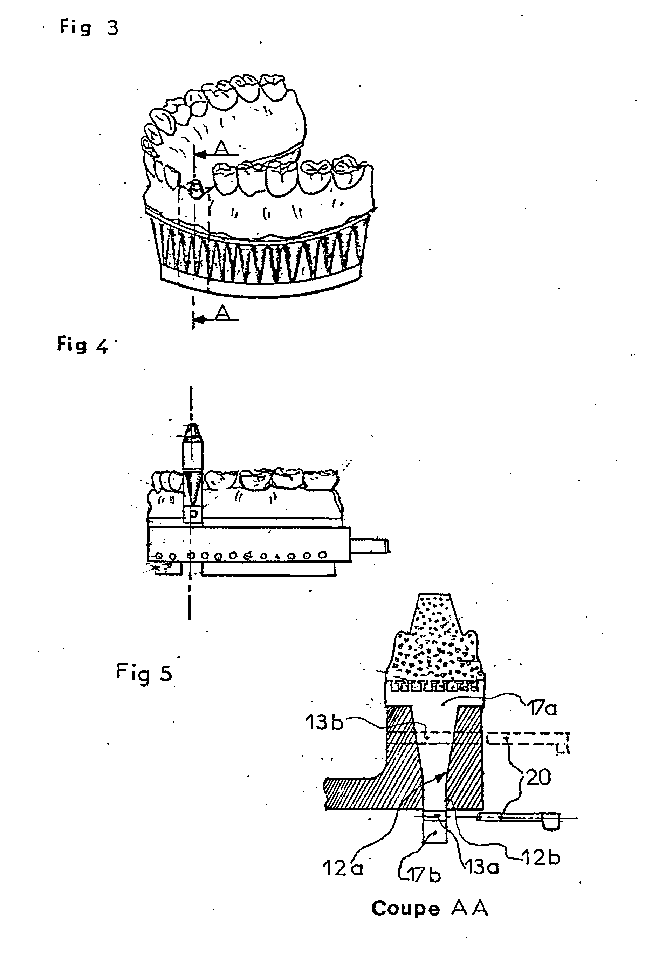

La lumière 12 comme représenté en coupe à la figure 5 présente une partie supérieure 12A tronconique ( pyramidale ou cylindrique) suivie par une partie inférieure 12B parallélépipédique.

Les parois latérales de la partie supérieure 11A de la lumière 11 présentent selon l'invention une succession de creux 13 et de reliefs 14 réalisant un détrompage.

De préférence les creux 13 sont en forme de cônes.
Le "bloc-positionneur" 15 est une pièce unique continue en forme d'arc de cercle conformée pour s'encastrer dans la lumière 12.

Il présente un plateau supérieur 16 doté de creux et picots constituant des rétentions pour blocage du moulage et une partie inférieure 17 dont la section épouse celle de la lumière 12.

A cet effet, la partie inférieure 17 du "bloc-positionneur" présente une première partie 17 A trônçonique, avec creux et reliefs correspondant aux reliefs et creux de la lumière 12 suivie d'une seconde partie 17 B de section parallélépipédique.

De préférence, la partie 17B du "bloc-positionneur" est plus longue que la partie inférieure à section parallélépipédique 12B de la lumière 12 en sorte de dépasser extérieurement sous le "support-dies" ce qui facilite par poussée la désolidarisation des deux pièces qui par le jeu de leur conicité se coincent naturellement en position.

Sur le pourtour du "support-dies" sont ménagés des perçages 18 régulièrement espacés qui traversent dans la lumière 17 et qui permettent de réaliser un clavetage transversal du "bloc-positionneur" dans la lumière ou d'un die après sciage.

La partie 17 du "bloc-positionneur" fait fonction d'élément de posi-

14

tionnement et de localisation du die et contribue à son clavetage.

En figure 3 est représenté un moulage en modèle d'un arc dentaire inférieur solidaire au "bloc-positionneur" après coulage de l'empreinte.

Sur cette figure les traits en pointillés représentent le tracé de découpe par sciage de la préparation.

La figure 4 représente l'ensemble après sciage avec désolidarisation du die unitaire 19.

La figure 5 représente en 13A et 13B deux possibilités de clavetage par des clavettes indépendantes 20.

La figure 6 est une vue de dessous du "support-dies".

La figure 7 représente le "support die" en coupe et la figure 8 représente le "support-dies" vue de dessin pour illustrer les creux et reliefs de la lumière.

La figure 9 représente une autre forme de réalisation de l'invention dans laquelle la paroi frontale 21 du renflement 10 du "support die" est plus étroite que sa paroi arrière.

De préférence la largeur de la paroi frontale 21 selon cette forme de réalisation est égale à celle de la portion 17A du bloc positionneur en sorte que la portion 17B à section parallélépipédique du "bloc-positionneur" soit apparente.

Selon cette forme de réalisation la face externe de la paroi 17 du "bloc-positionneur" présente une rainure horizontale 22 ou une nervure.

La rainure horizontale 22 du "bloc-positionneur" est réalisée sur la partie apparente de celui-ci lorsqu'il est encastré dans le support dies et au niveau du bord inférieur de la paroi frontale 21. Dans cette rainure 22 se loge une pièce plate en arc de cercle 23 qui se glisse sous la paroi frontale 21 et réalise en entourant le bloc positionneur le clavetage transversal en position de celui-ci sur le "support die" et bien sûr de chacun des dies séparément.

Pour simplifier la fabrication la face supérieure du bloc positionneur (coupe de la figure 9) est dotée d'une rainure 24 en creux qui fait fonction d'élément de rétention.

En 25 est représentée une plaquette de fixation de l'ensemble sur une articulation avec un relief 26 destiné à coopérer avec une lumière de forme correspondant 27 de la base plane 9 du support dies.

Les ""support-dies" sont interchangeables de même que les blocs positionneurs et peuvent indifféremment se placer soit à la branche du haut soit à celle du bas de l'occluseur ou articulation.

L'utilisation de ce système se fera comme suit :
Aprés prise d'empreinte au cabinet, le dentiste ou le prothésiste coulera cette empreinte à l'aide d'un matériau de reproduction tel que le plâtre.
Pendant que le plâtre est encore maléable, le technicien positionnera le ""bloc-positionneur"" du côté rétentif sur ce plâtre dans l'alignement de l'arcade et ce, trés facilement en respectant

0151086

-16-

certains repères tels que le point incisif par exemple. Dans le même temps sera coulée l'empreinte du modèle antagoniste. Le plâtre ayant durci, les empreintes seront démoulées; le moulage comportant le "bloc-positionneur" est mis en place dans le "support-dies" et claveté, ce "support-dies" étant sur sa branche correspondante de l'occluseur ( modèle supérieur ou inférieur). Le moulage antagoniste est alors mis en occlusion sur l'autre moulage déjà monté sur l'occluseur grâce à des cires d'occlusion ou autre procédé; le deuxième "bloc positionneur" est claveté sur le "support-dies" de l'autre branche de l'occluseur.

Du plâtre frais sera déposé sur le moulage antagoniste ( où quelques rétentions auront été réalisées) et en refermant l'occluseur la partie rétentive du "bloc positionneur" viendra se prendre dans ce plâtre frais. La mise en occluseur est alors terminée.

Dans le cas de la prothése adjointe, le prothésiste peut alors à ce stade réaliser son travail sans aucune autre préparation. Dans le cas de la prothése conjointe, le prothésiste, aprés avoir déclaveté et enlevé des "supports-dies" les "blocs-positionneurs" avec leur moulage procédera à la séparation par sciage des préparations du dentiste pour obtenir un ou plusieurs "dies". Ce sciage se fait de chaque côté de la préparation, à partir de ses bords suivant deux lignes parallèles ou légèrement convergentes. Si par hasard il y avait divergence dans les traits de scie dans ce système il y a possibilité de rendre conique par meulage le die supportant la préparation pour qu'il puisse être inséré facilement sans pour cela géner à son repositionnement précis et ce grâce aux creux et reliefs de la lumière du ""support-dies".

0151086

17

Ces deux étapes ayant été effectuées, le prothésiste replace l'ensemble des morceaux obtenus par sciage dans le ""support-dies" et réalise son travail en clavetant à la demande la partie intéréssant la ou les préparations. Un des avantages essentiels de ce système est que, tous les occluseurs "support-dies" et "bloc positionneur" étant rigoureusement identiques, et par conséquent tous les éléments parfaitement interchangeables, le dentiste pourra remonter les moulages de travail dans les "supports dies" de son occluseur et procéder ainsi aux vérifications et retouches éventuelles du travail effectué par le prothésiste.

La description concerne des réalisations prothétiques sur des arcades dentaires complètes. Il est bien entendu que ce système peut aussi s'appliquer à la réalisation de prothèse sur des demi-arcades voire des portions d'arcades.

Pour ce faire il pourra exister des "supports dies" représentant des demi-arcades avec des "blocs positionneurs" correspondant ayant les mêmes creux et reliefs que pour une arcade complète.

Il est bien entendu que "les supports dies" partiels auront le même système de fixation aux branches de l'occluseur que les "supports dies" complets. Ceci afin de faciliter d'une part le travail du prothésiste lorsqu'il n'a qu'une ou deux préparations à réaliser et d'autre part dans un but économique. A propos de ces empreintes partielles, une technique consiste à prendre simultanément et en occlusion l'empreinte de la préparation réalisée en bouche, les dents proximales et des dents antagonistes ; cette technique s'appelle prise d'empreinte en mordu, la mise en occluseur et la pose des dies est davantage simplifiée. On coule une partie de l'empreinte en y insérant pendant que le plâtre est encore frais le "bloc positionneur" partiel. Une fois le plâtre durci le "bloc positionneur" est

18

inséré dans le "support-dies" correspondant et claveté; l'empreint
n'étant toujours pas démoulée, on coule en plâtre la partie correspondante aux dents antagonistes et dans un même temps on rabat
la branche de l'occluseur supportant l'autre "support-dies" dans
lequel aura été claveté un "bloc positionneur" adéquat. On a réalisé
ainsi une préparation et un positionnement des "dies", une coulée
des moulages et une mise en occluseur dans un même temps. Les opérations suivantes sont des interventions classiques déjà citées dans
le paragraphe précédent.

Ce système a été décrit avec un "support-dies" constituant la partie
femelle et un "bloc-positionneur" constituant la partie mâle mais
ce peut être l'inverse et le "support-dies devient la partie mâle et le "bloc-positionneur" la partie femelle.
Pour un montage du système sur articulateur les tenons des supports
dies ne sont plus utilisés, la jonction avec les branches de l'articulateur se fera au niveau des supports dies par des tétons plastiques venant se clamper dans les trous de la base plane du "support-
dies". Sur l'autre face de ces plaquettes se trouvent de multiples
rétentions. Ces rétentions servent à la solidarisation, à l'aide de
plâtre, des "supports dies" sur les branches de l'articulateur,
seuls les "support-dies" complets sont utilisés.

Il va de soi que la présente invention peut recevoir des aménagements et des variantes dans le domaine des équivalents techniques
sans pour autant sortir du cadre du présent brevet.

REVENDICATIONS

1. Dispositif de préparation et de positionnement de "dies" ou modèles positifs unitaires pour tout ou partie de l'une ou de deux arcades dentaires et de mise en occlusion ou articulation des dites arcades et dies comportant au moins un bloc support (5) qui se fixe à l'une des branches (1-2) d'un occluseur ou articulation et un bloc positionneur (15) qui reçoit le moulage (6) de la préparation et se fixe sur le support die caractérisé en ce que le bloc positionneur présente une lumière continue (12) en arc de cercle la dite lumière traversant le support dies et que le bloc positionneur (15) en forme d'arc de cercle comprend un plateau (16) recevant le moulage et une partie inférieure (17) continue de forme correspondante à celle de la lumière qui traverse celle-ci.

2. Dispositif selon la revendication 1 caractérisé en ce que la lumière (12) présente une première partie (12A) tronconique suivie d'une deuxième partie à section parallélépipédique.

3. Dispositif selon la revendication 1 et la revendication 2 caractérisé en ce que la lumière (12) présente sur ses flancs latéraux une succession de creux (13) et reliefs (14).

4. Dispositif selon la revendication 1 et les revendications 2 et 3 caractérisé en ce que la partie inférieure (17) du bloc positionneur (15) comprend une première partie (17A) tronconique avec creux et reliefs correspondant aux reliefs et creux de la lumière et une deuxième partie à section parallélépipédique.

20

5. Dispositif selon la revendication 1 et les revendications 2 et 3 caractérisé en ce que le clavetage du bloc positionneur en totalité ou en partie sur le support die s'effectue transversalement à celui-ci.

6. Dispositif selon la revendication 1 et la revendication 5 caractérisé par une succession d'orifices (18) transversalement à la paroi frontale (21) du bloc support die.

7. Dispositif selon la revendication 1 caractérisé en ce que le clavetage du bloc positionneur s'effectue au moyen d'une pièce (23) en arc de cercle qui pénètre dans une rainure de la face avant du bloc positionneur.

8. Dispositif selon la revendication 1 et la revendication 7 caractérisé en ce que la face frontale (21) du support die est de largeur inférieure à la partie (17) du bloc positionneur qui est apparente et coopère en clavetage avec la pièce en arc de cercle (23).

9. Dispositif selon la revendication 1 caractérisé en ce que le plateau (16) du bloc positionneur possède des moyens de rétention du moulage (6)

10. Dispositif selon la revendication 1 caractérisé en ce que la base plane (9) du support die présente des moyens 11/26 d'accrochage d'une plaquette permettant la mise en occluseur.

1/4

**Fig 1**

**Fig 2**

Fig 3

Fig 4

Fig 5

13b

12a    17b    13a    12b

17a

20

Coupe AA

Fig 6

Fig 7

Coupe B B

Fig 8

0151086

4|4

Fig 9

22

Fig 10

21

27

23

section

Fig 11

26

25

24